# DEMANDE DE BREVET EUROPEEN

(11) **EP 0 894 916 A1**
(43) Date de publication de la demande: **03.02.1999**
(21) Numéro de dépôt: 98410064.4
(22) Date de dépôt: 03.06.1998
(51) Int. Cl.: E04G 23/00

(54) **Procédé de neutralisation sanitaire de l'amiante utilisé dans le bâtiment**

(30) Priorité: 30.07.1997 FR 9709978
(71) Demandeur: Brouckaert, Michel, 01300 Belley (FR)
(72) Inventeur: Brouckaert, Michel, 01300 Belley (FR)
(74) Mandataire: Hecké, Gérard

(57) **Abrégé**

Un procédé de neutralisation sanitaire des surfaces de bâtiment revêtues d'amiante consiste à appliquer sur les surfaces de flocage, une sous-couche de préimprégnation de colle aqueuse, suivie d'une couche d'enduit à base de dérivés de plâtre d'une épaisseur de 10 à 20 millimètres sur une armature de renfort constitué par un grillage métallique ou par une plaque de métal déployé. La couche d'enduit de protection peut être colorée par exemple au bleu de méthylène, pour permettre une identification facile des surfaces traitées après traitement.

## Description

L'invention est relative à un procédé de neutralisation sanitaire d'une couche de flocage à base d'amiante se trouvant sur une structure d'un bâtiment ou d'un immeuble, consistant à recouvrir l'amiante d'une couche d'enduit minéral à base de gypse ou de dérivés de plâtre pour constituer un revêtement superficiel protecteur ayant une épaisseur d'environ 10 à 20 millimètres.

Les propriétés d'isolation thermique, acoustique et anti-feu de l'amiante ont incité l'industrie du bâtiment à l'utiliser massivement dans l'isolation des locaux industriels et domestiques, publics ou privés. On constate à ce jour une grande nocivité des particules d'amiante en suspension dans l'air pour un très faible taux de concentration.

L'inhalation des particules d'amiante peut développer des maladies graves, et il est donc impérieux de neutraliser cette nocivité dans les locaux d'habitation.

La technique de neutralisation utilisée à ce jour consiste à déposer en totalité les projections d'amiante présentes dans le bâtiment.

Les opérations de désamiantage présentent néanmoins les inconvénients suivants :
- Coût très élevé,
- Mise à nu des gros oeuvres, notamment les structures métalliques qui peuvent subir des déformations en cas de forte chaleur,
- Aspect inesthétique consécutif au déflocage, et endommagement des étanchéités des canalisations ou des passages de câbles,
- Suppression de l'isolation thermique et acoustique des bâtiments,
- Manipulation massive d'amiante avec danger d'inhalation de particules nocives par les opérateurs,
- Obligation de neutralisation sanitaire de grands volumes de déchets d'amiante.

L'objet de l'invention consiste à élaborer un nouveau procédé de neutralisation sanitaire de l'amiante, évitant les opérations coûteuses de déflocage, tout en renforçant la tenue d'isolation thermique et acoustique de la structure à traiter.
- Le procédé selon l'invention est caractérisé en ce que :
- on applique une sous-couche de colle aqueuse sur la surface de flocage à traiter pour constituer un revêtement intermédiaire d'accrochage adhésif double face,
- on recouvre la sous-couche de colle par des éléments de renforts pour accroître l'adhérence et la tenue mécanique,
- et l'on projette l'enduit à base de gypse sur la sous-couche de colle, l'enduit se trouvant à l'état pâteux avec un dosage prédéterminé autorisant une prise du plâtre au moment de la phase de projection, de manière à obtenir une imprégnation optimum de la couche de flocage et un effet de pétrification de l'amiante sans inclusion d'air entre les interfaces des différentes couches.

La mise en oeuvre de ce procédé empêche toute propagation des particules ou molécules d'amiante dans l'environnement, et la présence de la couche d'enduit de protection renforce les qualités anti-feu, et d'isolation thermique et acoustique de la couche d'amiante traitée par l'effet de pétrification. Ce procédé est facile d'emploi et peut être mis en oeuvre rapidement sans prendre des mesures de confinement comme dans les procédés classiques de déflocage.

La sous-couche de colle aqueuse est réalisée au moyen d'une colle à papier peint. La colle de ladite sous-couche peut être teintée dans la masse par un agent colorant, notamment à base de bleu de méthylène.

Selon une caractéristique de l'invention, on utilise comme éléments de renfort une armature métallique, formée par un grillage galvanisé, ou une plaque perforée à métal déployée. L'armature métallique est fixée à la structure par des chevilles métalliques et des vis à base de laiton ou d'aluminium associées à des rondelles d'arrêt, l'espacement des vis étant compris entre 40 et 70 cm.

Selon une autre caractéristique de l'invention, les fibres ou particules sont formées par des fibres de verre sous forme de paillettes avec un pourcentage en poids de l'ordre de 15 % par rapport à la masse de l'enduit de gypse.

La couche d'enduit peut être teintée dans la masse par un agent colorant pour identifier visuellement les surfaces traitées après projection dudit enduit.

D'autres avantages et caractéristiques ressortiront plus clairement de la description qui va suivre d'un mode de mise en oeuvre du procédé selon l'invention.

La présente invention concerne la neutralisation sanitaire par effet de pétrification d'une couche de flocage à base d'amiante se trouvant sur une structure d'un bâtiment ou immeuble. Le procédé consiste à recouvrir totalement la couche d'amiante au moyen d'une couche d'enduit minéral à base de gypse ou de dérivés de plâtre, pour constituer un revêtement protecteur ayant une épaisseur d'environ 10 à 20 millimètres. L'adhérence de la couche d'enduit sur la surface de flocage d'amiante est renforcée grâce à la préimprégnation de la surface de flocage avec une sous-couche de colle aqueuse et incombustible, de faible épaisseur, permettant d'obtenir un piégeage des particules d'amiante et en empêchant tout échappement. La sous-couche de colle aqueuse peut être colorée dans la masse par un agent colorant, notamment du bleu de méthylène, pour indiquer à l'opérateur les zones de projection de l'enduit de pétrification.

La sous-couche de colle aqueuse constitue un revêtement d'accrochage adhésif double face indispensable pour l'obtention de l'effet de pétrification. L'une des faces de la sous-couche de colle retient les particules d'amiante en jouant le rôle de durcisseur sans inclusion de poches d'air. L'autre face permet l'accrochage de l'enduit de protection de gypse, également à l'abri de l'air lors de la phase de projection .

La formation de la couche d'enduit de gypse de projection peut être réalisée par projection, par exemple, au moyen d'une machine à projeter comprenant un compresseur, un malaxeur, et une lance de projection.

La couche d'enduit de gypse peut également être teintée dans la masse pour identifier visuellement les surfaces traitées. La teinte de l'agent colorant peut être bleue, obtenue par exemple au moyen d'addition du bleu de méthylène ou ses dérivés. Une couche de peinture de finition est susceptible d'être appliquée sur la couche d'enduit durcie pour des besoins esthétiques.

Après application et durcissement de la couche d'enduit de neutralisation sur la couche d'amiante, les fonctions anti-feu et d'isolation thermique liées aux propriétés de l'amiante sont conservées, mais sans danger pour l'environnement.

La couche d'enduit de projection assure d'autre part une étanchéité supplémentaire, et le procédé de recouvrement est facile à mettre en oeuvre sans danger pour l'opérateur.

Pour accroître l'adhérence et la tenue mécanique de la couche d'enduit, une armature de renfort est avantageusement rapportée sur la sous-couche de colle après application de cette dernière sur la couche de flocage. L'armature peut être formée par un grillage métallique galvanisé, par exemple à perforation 12/12, ou par une plaque de métal déployé connue sous le nom commercial NERGALTO.

La fixation de l'armature métallique s'effectue au moyen de chevilles métalliques introduites dans la structure, et de vis en laiton ou aluminium associées à des rondelles d'arrêt. L'écartement des vis est compris environ entre 40 et 70 centimètres pour des vis de 6 mm de diamètre.

L'utilisation des armatures métalliques est particulièrement adaptée lorsque l'enduit de protection est appliqué sur un plafond, ou tout autre structure plane horizontale à traiter.

Dans le cas de structures de formes complexes, l'armature métallique peut être remplacée par des éléments de renforts minéraux mélangés, directement avec le matériau à base de gypse de la couche d'enduit. Les éléments de renforts peuvent être des fibres de verre, notamment sous forme de paillettes, avec un pourcentage en poids de l'ordre de 15 % par rapport à la masse de l'enduit. La couche de gypse de protection constitue alors un écran autoporteur et armé ayant des propriétés d'isolation thermique et acoustique de longue durée.

Les étapes successives de procédé de revêtement de la couche de flocage d'amiante sont les suivants :
- on applique directement la sous-couche de colle aqueuse sur la surface de flocage à traiter,
- on fixe éventuellement l'armature métallique de renfort sur la sous-couche de colle après son ancrage dans le mur ou le plafond recouvert par la couche de flocage,
- on applique par projection mécanique l'enduit de plâtre teinté à l'état pâteux, lequel traverse les orifices de l'armature de renfort en coopérant avec la sous-couche de colle aqueuse pour obtenir une adhérence double face avec la couche de flocage. Il en résulte l'effet de pétrification recherché, sans aucune inclusion d'air entre les interfaces d'assemblage des différentes couches.

La préparation et le dosage de l'enduit de plâtre sont choisis pour obtenir une prise de plâtre au moment de la projection, de manière à obtenir une imprégnation optimum de la couche de flocage d'amiante.

Le procédé de pétrification pour la protection totale des dangers de l'amiante est applicable sur toutes surfaces ou supports recouverts d'amiante, notamment des murs en béton, des poutres ou poutrelles métalliques, et même des charpentes en bois. L'ensemble formé par la couche d'amiante, et le produit de pétrification de la couche d'enduit avec son armature de renfort, constitue un véritable bouclier à isolation thermique et acoustique.

L'addition du bleu de méthylène comme agent colorant dans la couche d'enduit de gypse procure trois fonctions distinctes :
- une première fonction de marqueur pour identifier visuellement les surfaces traitées ;
- une deuxième fonction de désinfection sanitaire de la structure ;
- et une troisième fonction de détection d'un suréchauffement par changement de la couleur de la couche d'enduit de gypse.

Il est clair que le bleu de méthylène peut être remplacé par tout autre agent colorant ayant les mêmes fonctions techniques.

## Revendications

1. Procédé de neutralisation sanitaire d'une couche de flocage à base d'amiante se trouvant sur une structure d'un bâtiment ou d'un immeuble, consistant à recouvrir l'amiante d'une couche d'enduit minéral à base de gypse ou de dérivés de plâtre pour constituer un revêtement superficiel protecteur ayant une épaisseur d'environ 10 à 20 millimètres,
caractérisé par les étapes successives suivantes :
- on applique une sous-couche de colle aqueuse sur la surface de flocage à traiter pour constituer un revêtement intermédiaire d'accrochage adhésif double face,
- on recouvre la sous-couche de colle par des éléments de renforts pour accroître l'adhérence et la tenue mécanique,
- et l'on projette l'enduit à base de gypse sur la sous-couche de colle, l'enduit se trouvant à l'état pâteux avec un dosage prédéterminé autorisant une prise du plâtre au moment de la phase de projection, de manière à obtenir une imprégnation optimum de la couche de flocage et un effet de pétrification de l'amiante sans inclusion d'air entre les interfaces des différentes couches.

2. Procédé de neutralisation selon la revendication 1, caractérisé en ce que la sous-couche de colle aqueuse est réalisée au moyen d'une colle à papier peint.

3. Procédé de neutralisation selon la revendication 2, caractérisé en ce que la colle de ladite sous-couche peut être teintée dans la masse par un agent colorant, notamment à base de bleu de méthylène.

4. Procédé de neutralisation selon la revendication 1, caractérisé en ce qu'on utilise comme éléments de renfort une armature métallique, formée par un grillage galvanisé, ou une plaque perforée à métal déployé.

5. Procédé de neutralisation selon la revendication 4, caractérisé en ce que l'armature métallique est fixée à la structure par des chevilles métalliques, et des vis à base de laiton ou d'aluminium associées à des rondelles d'arrêt, l'espacement des vis étant compris entre 40 et 70 cm.

6. Procédé de neutralisation selon la revendication 1, caractérisé en ce qu'on utilise comme éléments de renfort, des fibres ou particules minérales mélangées directement avec le gypse de la couche d'enduit.

7. Procédé de neutralisation selon la revendication 6, caractérisé en ce que les fibres ou particules sont formées par des fibres de verre sous forme de paillettes avec un pourcentage en poids de l'ordre de 15% par rapport à la masse de l'enduit de gypse.

8. Procédé de neutralisation selon la revendication 1, caractérisé en ce que la couche d'enduit peut être teintée dans la masse par un agent colorant pour identifier visuellement les surfaces traitées après projection dudit enduit.

9. Procédé de neutralisation selon la revendication 1, caractérisé en ce que l'agent colorant est du bleu de méthylène, ayant un pouvoir désinfectant, et susceptible de changer de couleur en fonction de la température de la couche d'enduit.
